Europäisches Patentamt

European Patent Office

Office européen des brevets

(11) Veröffentlichungsnummer: **0 274 069**
**A2**

## (12) EUROPÄISCHE PATENTANMELDUNG

(21) Anmeldenummer: 87118132.7

(22) Anmeldetag: 08.12.87

(51) Int. Cl.⁴: **C02F 1/52 , C02F 1/56**

(30) Priorität: 11.12.86 DE 3642362

(43) Veröffentlichungstag der Anmeldung:
13.07.88 Patentblatt 88/28

(84) Benannte Vertragsstaaten:
**AT BE CH DE FR GB IT LI LU NL SE**

(71) Anmelder: **Schill & Seilacher GmbH & Co.**
**Schönaicherstrasse 205**
**D-7030 Böblingen(DE)**

(72) Erfinder: **Leberfinger, Rolf, Dr. Dipl.-Ing.**
**.Eschenweg 5**
**D-7038 Holzgerlingen(DE)**
Erfinder: **Rathfelder, Paul, Dr. Dipl.-Chemiker**
**Stockholmer Strasse 15**
**D-7030 Böblingen(DE)**

(74) Vertreter: **Bunke, Holger, Dr.rer.nat.**
**Dipl.-Chem. et al**
**Patentanwälte Prinz, Leiser, Bunke & Partner**
**Manzingerweg 7**
**D-8000 München 60(DE)**

(54) Verfahren und Mittel zur Reinigung von Abwässern.

(57) Es werden ein Verfahren und ein Mittel zur Reinigung von Abwässern vorgeschlagen, mit denen es gelingt, nicht nur Schlämme zu entwässern, sondern auch im Abwasser gelöste Stoffe zu binden und filtrierbar zu machen. Hierzu versetzt man das Abwasser mit einem Gemisch (A) einer im Pulper aufgeschlagenen Pulpe aus zerfasertem Zellstoff, Holzschliff und/oder Altpapier und Wasser sowie (B) einer wäßrigen Lösung eines polymeren Polyelektrolyten, wobei das Gemisch in einer Menge zugegeben wird, die ausreicht, um die aus dem Abwasser abzutrennenden Stoffe unter Bildung filtrierbarer, mit Schmutzfrachtteilchen beladener Feststoffteilchen zu binden. Dabei wird ein Filterkuchen produziert, der verbrannt werden kann und nicht deponiert werden muß.

## Verfahren und Mittel zur Reinigung von Abwässern

Die Erfindung betrifft ein Verfahren zur Reinigung von Abwässern, bei dem das Abwasser mit Zellstoff, Holzschliff und/oder Altpapier sowie mit einem polymeren Polyelektrolyten versetzt und innig vermischt wird und anschließend die filtrierbaren Feststoffteilchen aus dem Gemisch abgetrennt werden, sowie ein Mittel zum Reinigen von Abwässern, das insbesondere bei diesem Verfahren angewandt werden kann.

Abwässer, insbesondere industrielle Abwässer, können in Form echter Lösungen, aber auch in Form stabiler Emulsionen und Dispersionen, d.h. in Form kolloiddisperser Systeme, anfallen. Diese Abwässer müssen vor der Einleitung in das öffentliche Kanalnetz oder in ein Gewässer geklärt werden, d.h. sie müssen von der gelösten, emulgierten oder dispergierten Phase befreit werden. Besonders problematisch ist die Entsorgung industrieller Abwässer, die Mineralöle, Farbstoffe oder umweltgefährdende Stoffe im weitesten Sinne als Schmutzfracht enthalten.

Es ist Stand der Technik, stabile wäßrige Emulsionen oder Dispersionen durch Zusatz geeigneter anorganischer und/oder organischer Flockungsmittel zu "brechen" und die durch Adsorption oder Agglomeration vergrößerten Feststoffteilchen auf an sich bekannte Weise, z.B. durch Filtration, abzutrennen und gegebenenfalls den Filterkuchen zu entwässern.

Als anorganische Flockungsmittel werden in der Praxis insbesondere Aluminiumsulfat, Aluminiumchlorid, Eisen(II)sulfat und Eisen(III)chlorid eingesetzt.

Als organische Flockungsmittel und Flockungshilfsmittel kommen insbesondere synthetische Polymere auf Basis von Polyäthyleniminen, Polyacrylamiden, Polyätheraminen, Polyacrylaten und Polymethacrylaten mit nichtionischem, anionischem und kationischem Charakter zum Einsatz.

Die Wirkungsweise der genannten Flockungsmittel ist in der Literatur eingehend beschrieben.

Die bekannten und genannten anorganischen Flockungsmittel zur Entmischung stabiler Emulsionen und Dispersionen sind mit schwerwiegenden Nachteilen behaftet:

Aus den zugesetzten Eisen-oder Aluminiumsalzen und Calciumhydroxid oder sonstigen Basen entstehen große Mengen an Metallhydroxid-Schlämmen, die zum einen die verwendeten Filter häufig schnell zusetzen und verstopfen und zum anderen sich nur schlecht entwässern lassen. Außerdem können die Metallhydroxid-Schlämme nicht verbrannt werden, sondern sie müssen deponiert werden.

Die schlechte Filtrierbarkeit wird oft durch die Zugabe von Konditionierungsmitteln, wie z. B. Flugasche, Calciumhydroxid, Tonerde oder anderen anorganischen Pigmenten, verbessert. Diese bewirken, daß die feinen Schlammpartikel an die größeren Konglomerate des Konditionierungsmittels angelagert werden, wodurch eine druckstabile Struktur entsteht und der sich aufbauende Filterkuchen porös und wasserdurchlässig bleibt. Der Nachteil der Konditionierung besteht darin, daß das Volumen des entwässerten Schlammes in Form des Filterkuchens, der zu deponieren ist, weiter zunimmt.

Auch die bekannten und aufgeführten organischen polymeren Flockungsmittel haben den Nachteil, daß die sich bildenden Schlämme häufig schlecht filtrierbar sind und deshalb des Zusatzes von Konditionierungsmitteln bedürfen. Darüber hinaus weisen sie zwei weitere wesentliche Nachteile auf:

1.) Überdosierung führt zur Restabilisierung emulgierter bzw. disperser Systeme;

2.) die Flocke ist empfindlich gegen mechanische Beanspruchung, z.B. durch Rühren und Pumpen, und läßt sich nach Zerstörung nicht mehr koagulieren.

Deswegen finden die organischen Flockungsmittel vorwiegend nur in Kombination mit anorganischen Flockungsmitteln als Flockungshilfsmittel Anwendung. Diese Kombination ist heute sehr gebräuchlich.

Aus der internationalen Patentanmeldung DE 34 90 692 T1 ist es bekannt, Schlämme, also bereits "gebrochene" Dispersionen, dadurch zu entwässern, daß dem Schlamm ein Fasermaterial, z.B. zersetztes Altpapier, Sägemehl, Zellstoff oder dergleichen, zugegeben wird, dessen spezifische Schüttdichte durch vorheriges Benetzen mit Wasser und wenigstens einem Ausflockungsmittel mit hohem Molekulargewicht auf wenigstens 0,3 g/cm³ erhöht wird.

Vorzugsweise wird das mit Wasser und wenigstens einem Ausflockungsmittel benetzte Fasermaterial zu Formkörpern mit einem Durchmesser von weniger als 10 cm, vorzugsweise von weniger als 3 cm, verpreßt. Diese Preßkörper, z.B. in Form von Pellets, werden mit dem Schlamm vermischt, wobei gegebenenfalls noch weitere übliche Zusätze, z.B. Tenside oder Mittel zur Einstellung des pH-Werts, hinzugefügt werden, und das Gemisch wird anschließend durch Filtration in an sich bekannter Weise entwässert.

Bei diesem bekannten Verfahren werden als Ausflockungsmittel mit hohem Molekulargewicht kationische, anionische und richtionische Polymere verwendet, wobei Polymere aus kationischen Monomeren, z.B. Acrylaten, verwendet werden, wobei auch Polyethylenimine als geeignete kationische Ausflockungsmittel genannt werden.

Dieses bekannte Verfahren ist wegen des erforderlichen Verpressens des mit dem Ausflockungsmittel behandelten Fasermaterials umständlich und aufwendig und deshalb für großtechnische kommunale und industrielle Abwasserbehandlungsanlagen wenig geeignet. Außerdem setzt die Wirksamkeit des bekannten Verfahrens die Existenz eines Schlammes, also einer bereits gebrochenen Dispersion, voraus. Da viele Abwässer aber in Form von echten Lösungen und stabilen Emulsionen und Dispersionen vorliegen, ist das bekannte Verfahren in diesen Fällen nicht anwendbar.

Der Erfindung liegt deshalb die Aufgabe zugrunde, ein Verfahren und ein Mittel zum Reinigen von Abwässern der eingangs genannten Gattung zu schaffen, mit denen es gelingt, nicht nur Schlämme zu entwässern, sondern auch im Abwasser gelöste Stoffe zu binden und filtrierbar zu machen sowie stabile Emulsionen und Dispersionen zu bre chen, die emulgierten oder dispergierten Schadstoffe zu binden und ebenfalls filtrierbar zu machen. Dabei soll gleichzeitig die Bildung von stark wasserhaltigen Dünnschlämmen soweit wie möglich vermieden werden, die Funktionsdauer der verwendeten Filter verlängert werden und ein Filterkuchen produziert werden, der verbrannt werden kann und somit nicht deponiert werden muß.

Diese Aufgabe wird durch das Verfahren gemäß den Patentansprüchen 1 bis 6 und durch die Bereitstellung des Mittels gemäß den Patentansprüchen 7 bis 13 gelöst.

Erfindungsgemäß wurde gefunden, daß die Zugabe eines Gemisches aus (A) einer im Pulper aufgeschlagenen Pulpe aus zerfasertem Zellstoff, Holzschliff und/oder Altpapier und Wasser und (B) einer wäßrigen Lösung eines polymeren Polyelektrolyten zu den zu reinigenden Abwässern überraschenderweise sowohl zur chemischen und/oder physikalischen Bindung von im Abwasser gelösten Stoffen, beispielsweise von Reaktivfarbstoffen, an den mit dem Polyelektrolyten modifizierten Faserstoff als auch zur Brechung von zunächst stabilen Emulsionen und Dispersionen führt, wobei im letzteren Falle die emulgierten bzw. dispergierten Schmutzfrachtteilchen unter der Einwirkung bzw. durch Vermittlung des Polyelektrolyten an den Faserstoff chemisch und/oder physikalisch gebunden werden und dadurch zusammen mit den Faserstoffteilchen auf an sich bekannte Weise, z.B. durch Filtration, abgetrennt werden können.Der exakte Mechanismus der sich hierbei abspielenden komplizierten Vorgänge ist jedoch noch weitgehend ungeklärt. Entscheidend ist jedoch, daß die Anwendung des erfindungsgemäßen Verfahrens und des erfindungsgemäßen Mittels zu einer überraschend vollständigen Abtrennung von in Abwässern gelösten, emulgierten und dispergierten Schadstoffen bzw. Schmutzfrachtteilchen führt. Besonders vorteilhaft lassen sich das erfindungsgemäße Verfahren und das erfindungs gemäße Mittel verwenden, um emulgierte oder dispergierte Öle und Fette und gelöste Farbstoffe aus industriellen Abwässern zu entfernen.

Wie Vergleichsversuche zeigten, ist es für den Erfolg des erfindungsgemäßen Verfahrens und des erfindungsgemäßen Mittels entscheidend, daß der verwendete Faserstoff vor der Zugabe zu dem zu reinigenden Abwasser im Pulper aufgeschlagen wird.

Das Gemisch aus der Pulpe (A) und der wäßrigen Lösung eines polymeren Polyelektrolyten (B) wird dem Abwasser erfindungsgemäß in einer Menge zugegeben, die ausreicht, um die aus dem Abwasser abzutrennenden Stoffe an den Zusatz aus (a) Zellstoff, Holzschliff und/oder Altpapier und (b) polymerem Polyelektrolyten unter Bildung filtrierbarer, mit Schmutzfrachtteilchen beladener Feststoffteilchen zu binden. Die im Einzelfall zuzugebende absolute Menge hängt von der Art und Zusammensetzung des zu reinigenden Abwassers ab und kann vom Fachmann im Rahmen einfacher Vorversuche empirisch ermittelt werden.

Der Feststoffgehalt der verwendeten Pulpe beträgt vorzugsweise etwa 1 bis etwa 15 Gew.%, während der Gehalt des erfindungsgemäßen Mittels an polymerem Polyelektrolyten vorzugsweise 1 bis 50 Gew.% beträgt, bezogen auf den absolut trockenen Faserstoff.

Wenn der Faserstoff in dieser Beschreibung und in den Patentansprüchen mit "Zellstoff, Holzschliff und/oder Altpapier" bezeichnet wird, so ist darunter jede beliebige Kombination aus diesen Materialien zu verstehen, also z.B. auch eine Mischung aus Altpapier und Holzschliff, eine Mischung aus Zellstoff und Holzschliff, eine Mischung aus Zellstoff und Altpapier, eine Mischung aus Zellstoff, Holzschliff und Altpapier oder nur Zellstoff, nur Holzschliff, nur Altpapier usw.

Bei den polymeren Polyelektrolyten werden solche mit kationischem Charakter bevorzugt, insbesondere solche, die ausgewählt sind aus der aus Polyäthyleniminen, Polyätheraminen und kationischen Copolymerisaten von Dicyandiamid-, Polyacrylsäure-oder Polymethacrylsäure-Derivaten bestehenden Gruppe.

Das erfindungsgemäße Verfahren wird vorzugsweise bei einem pH-Wert von zwischen 6 und 10 durchgeführt, und auch das erfindungsgemäße Mittel weist vorzugsweise einen pH-Wert innerhalb des genannten Bereichs auf.

Gegebenenfalls kann bei dem Verfahren entweder dem zu reinigenden Abwasser oder dem erfindungsgemäßen Mittel zusätzlich mindestens ein Tensid zugegeben werden.

Das erfindungsgemäße Mittel ist unempfindlich gegen Überdosierung und bildet aufgrund seiner Faserstruktur eine mechanisch stabile Flocke, die sich ohne weitere Konditionierungsmittel auf Entwässerungsmaschinen, z.B. Kammerfilterpressen, sehr gut filtern und entwässern läßt, ohne daß es zu dem gefürchteten vorzeitigen Verstopfen von Filtersieben und Filtertüchern kommt. Wegen des hohen Heizwertes ist eine problemlose Verbrennung des Filterkuchens möglich. Auf die aus Umweltschutzgründen höchst problematische Deponierung der abgetrennten, mit Schmutzfrachtteilchen beladenen Feststoffteilchen kann deshalb erfindungsgemäß verzichtet werden.

Zur Herstellung des erfindungsgemäßen Mittels wird eine vorzugsweise 1 bis 15%ige, im Pulper aufgeschlagene Pulpe aus zerfasertem Faserstoff der bereits erwähnten Art unter Rühren mit einer wäßrigen Lösung des polymeren Polyelektrolyten versetzt. Zur besseren Verteilung und Fixierung des Polyelektrolyten auf den Fasern der verwenderen Faserstoffe rührt man ca. 1 Stunde nach. Bezogen auf absolut trockenen Faserstoff verwendet man vorzugsweise 1 bis 50 Gew.% des 100%igen polymeren Polyelektrolyten.

Die Kombination von kationischen Polyelektrolyten und im Pulper aufgeschlagenen Zellulosefasern führt infolge der positiven Umladung der Fasern zu einer "modifizierten Cellulose" mit hoher Aktivität im Hinblick auf die Brechung bzw. Spaltung von Emulsionen und anderen dispersen Systemen. Die erfindungsgemäß verwendeten polymeren Polyelektrolyte sind wasserlösliche höhermolekulare polyfunktionelle Polymerisate.

Das erfindungsgemäße Mittel kann zusammen mit einem Flokkungsmittel bekannter Art, beispielsweise Eisen-oder Aluminiumsalzen, eingesetzt werden und es kann zusätzlich pulverisiertes Holz enthalten.

Die Erfindung wird anhand der folgenden Beispiele weiter erläutert:

Die Beispiele 1 bis 4 sind Beispiele für die Reinigung von aus der Textilfärberei stammenden Abwässern, die gelöste Reaktivfarbstoffe enthalten, während die Beispiele 5 und 6 die Reinigung von Abwässern betreffen, die emulgierte Öle enthalten.

Beispiel 1

In einem Pulper stellt man eine 6%ige Stofflösung (Dispersion) aus Fichtensulfit-Zellstoff her.

800 Teile dieser Stofflösung versetzt man unter Rühren mit 130 Teilen einer 40%igen handelsüblichen wäßrigen Lösung eines kationischen Polyelektrolyten auf der Basis eines Kondensationsproduktes von Dicyandiamid. Um eine meglichst gleichmäßige Verteilung auf dem Fasermaterial zu erreichen, rührt man noch 1 Stunde nach. Zum Stabilisieren der resultierenden, zum Trennen neigenden Faserdispersion vermischt man diese anschließend in einem Kneter mit 70 Teilen pulverisiertem Holz.

Von einem so zubereiteten Produkt gibt man unter Rühren 18,2 kg zu 1000 l Waschwasser der Extinktion 2.0 einer Färbung von Baumwolle mit einem roten Reaktivfarbstoff vom Dichlortriazintyp (Procion Red MX-5B, Colour Index Reactive Red 2). Man rührt 15 Minuten, läßt über Nacht absitzen und filtriert. Das Filtrat ist weitgehend entfärbt (Extinktion 0,04).

Beispiel 2

Zu 1000 l Waschwasser der Extinktion 1,9 einer Färbung von Baumwolle mit einem roten Reaktivfarbstoff vom Vinylsulfontyp (Remazolbrillantrop 5B, Colour Index Reaxtive Red 35) gibt man unter Rühren 9,1 kg des gemäß Beispiel 1 zubereiteten Produktes. Man rührt 15 Minten, läßt 6 Stunden absitzen und filtriert. Das Filtrat ist völlig entfärbt (Extinktion 0).

Beispiel 3

Zu 1000 l Waschwasser der Extinktion 0,8 einer Färbung von Baumwolle mit einem blauen Reaktivfarbstoff vom Dichlorchinoxalintyp (Levafixbrillantblau EB, Colour Index Reactive Blue 29) gibt man unter Rühren 9,1 kg des gemäß Beispiel 1 zubereiteten Produktes. Man rührt 15 Minuten, läßt 2 Stunden absitzen und filtriert. Das Filtrat ist völlig entfärbt (Extinktion 0).

Beispiel 4

Zu 1000 l Waschwasser der Extinktion 1,6 einer Färbung von Baumwolle mit einer Mischung von sechs Reaktivfarbstoffen unterschiedlicher Farbe und unterschiedlichen Typs gibt man unter Rühren 18,2 kg des gemäß Beispiel 1 zubereiteten Produktes. Man rührt 15 Minuten, läßt 4 Stunden absitzen und filtriert. Das Filtrat ist weitgehend entfärbt (Extinktion 0,05).

Das verwendete Waschwasser enthielt folgende Farbstoffe:

Procion Red MX - 5B, Colour Index Reactive Red 2
Remazolbrillantrot 5 B, Colour Index Reactive Red 35
Levafixbrillantblau EB, Colour Index Reactive Blue 29
Procion Red HE-3B, Colour Index Reactive Red 120
Remazolbrillantorange FR, Colour Index Reactive Orange 82 (S)
Levafixscharlach E - 2GA, Colour Index Reactive Red 123 (S)

Beispiel 5

In einem "Hydro-Pulper" stellt man eine 5%ige Stofflösung (Dispersion) von Zeitungspapier her. 1000 l dieser Stofflösung versetzt man unter Rühren mit 50 kg einer 25%-wäßrigen Lösung von handelsüblichem kationischem Polyätheramin. Um eine möglichst gleichmäßig Verteilung des kationischen Polyelektrolyten auf den Fasern zu erzielen, rührt man noch 1 Stunde nach.

Von dem so zubereiteten Mittel gibt man unter Rühren 20 kg zu 1000 l Abwasser aus einer Sammelkläranlage eines ölverarbeitenden Betriebes. Dieses enthält durch die Anwesenheit von nichtionogenen und anionischen Emulgatoren 800 mg/l fein und stabil emulgiertes Mineralöl. Nach einstündigem Rühren läßt man absitzen. Im Laufe von 4 Stunden setzen sich am Boden ca. 200 l eines gut filtrierbaren Schlammes ab. Sowohl das überstehende Wasser als auch das beim Filtrieren des Schlammes anfallende Filtrat sind klar und enthalten weniger als 10 mg/l Mineralöl. Der ölhaltige Filterkuchen mit einem Wassergehalt von 48 % verbrennt nach dem Trocknen mit leuchtender Flamme wesentlich besser als das für die Stofflösung verwendete Zeitungspapier.

Beispiel 6

Zu 100 l Abwasser, welches beim Auswaschen von mit einem "Spulöl" behandelten Textilspulen anfällt und 1,5 g/l Kohlenwasserstoffe auf der Basis eines technischen Weißöles in Form einer sehr feinen und stabilen Emulsion enthält, gibt man unter Rühren 4 kg des gemäß Beispiel 5 zubereiteten Mittels. Man rührt 1 Stunde nach und läßt über Nacht absitzen. Dabei erhält man als obere Phase ca. 70 l klares Wasser. Der sich unten absetzende Schlamm wird filtriert; das anfallende Filtrat ist ebenfalls klar und enthält wie die überstehende klare Wasserphase weniger als 10 mg/l Kohlenwasserstoffe.

Ansprüche

1. Verfahren zur Reinigung von Abwässern, bei dem das Abwasser mit Zellstoff, Holzschliff und/oder Altpapier sowie mit einem polymeren Polyelektrolyten versetzt und innig vermischt wird und anschließend die filtrierbaren Feststoffteilchen aus dem Gemisch abgetrennt werden, dadurch gekennzeichnet, daß dem Abwasser ein Gemisch aus

(A) einer im Pulper aufgeschlagenen Pulpe aus zerfasertem Zellstoff, Holzschliff und/oder Altpapier und Wasser und

(B) einer wäßrigen Lösung eines polymeren Polyelektrolyten

in einer Menge zugegeben wird, die ausreicht, um die aus dem Abwasser abzutrennenden Stoffe an den Zusatz aus (a) Zellstoff, Holzschliff und/oder Altpapier und (b) polymerem Polyelektrolyten unter Bildung filtrierbarer, mit Schmutzfrachtteilchen beladener Feststoffteilchen zu binden.

2. Verfahren nach Anspruch 1, dadurch gekennzeichnet, daß eine Pulpe (A) mit einem Feststoffgehalt von etwa 1 bis 15 Gew.% verwendet wird.

3. Verfahren nach Anspruch 1 oder 2, dadurch gekennzeichnet, daß als polymerer Polyelektrolyt mindestens ein Polyelektrolyt mit kationischem Charakter verwendet wird.

4. Verfahren nach Anspruch 3, dadurch gekennzeichnet, daß als kationischer polymerer Polyelektrolyt mindestens einer verwendet wird, der ausgewählt wird aus der aus Polyäthyleniminen, Polyätheraminen und kationischen Copolymerisaten von Dicyandiamid-, Polyacrylsäure-oder Polymethacrylsäure-Derivaten bestehenden Gruppe.

5. Verfahren nach einem der Ansprüche 1 bis 4, dadurch gekennzeichnet, daß das Gemisch aus Abwasser und Zusatzstoffen auf einen pH-Wert von zwischen 6 und 10 eingestellt wird.

6. Verfahren nach einem der Ansprüche 1 bis 5, dadurch gekennzeichnet, daß dem Gemisch aus Abwasser und Zusatzstoffen noch mindestens ein Tensid zugegeben wird.

7. Mittel zum Reinigen von Abwässern, insbesondere zur Anwendung bei dem Verfahren gemäß einem der Ansprüche 1 bis 6, bestehend aus einem Gemisch aus

(A) einer im Pulper aufgeschlagenen Pulpe aus zerfasertem Zellstoff, Holzschliff und/oder Altpapier und Wasser und

(B) einer wäßrigen Lösung eines polymeren Polyelektrolyten.

8. Mittel nach Anspruch 7, dadurch gekennzeichnet, daß die Pulpe einen Feststoffgehalt von etwa 1 bis 15 Gew.% besitzt.

9. Mittel nach Anspruch 7 oder 8, dadurch gekennzeichnet, daß der Gehalt an polymeren Polyelektrolyten 1 bis 50 Gew.%, bezogen auf den absolut trockenen, zerfaserten Stoff, beträgt.

10. Mittel nach einem der Ansprüche 7 bis 9, dadurch gekennzeichnet, daß es als polymeren Polyelektrolyten mindestens einen Polyelektrolyten mit kationischem Charakter enthält.

11. Mittel nach Anspruch 10, dadurch gekennzeichnet, daß es als polymeren Polyelektrolyten mindestens einen enthält, der ausgewählt ist aus der aus Polyäthyleniminen, Polyätheraminen und kationischen Copolymerisaten von Dicyandiamid-, Polyacrylsäure-oder Polymethacrylsäure-Derivaten bestehenden Gruppe.

12. Mittel nach einem der Ansprüche 7 bis 11, gekennzeichnet durch einen pH-Wert von zwischen 6 und 10.

13. Mittel nach einem der Ansprüche 7 bis 12, dadurch gekennzeichnet, daß es zusätzlich mindestens ein Tensid enthält.

14. Mittel nach einem der Ansprüche 7 bis 13, dadurch gekennzeichnet, daß es zusätzlich pulverisiertes Holz enthält.